# EUROPEAN PATENT APPLICATION

(11) **EP 1 712 895 A1**
(43) Date of publication of application: **18.10.2006**
(21) Application number: 04820883.9
(22) Date of filing: 03.12.2004
(51) Int. Cl.: G01N 21/27

(54) **METHOD AND APPARATUS FOR MEASURING OPTICAL CHARACTERISTICS OF COLORED LIQUID**

(30) Priority: 25.12.2003 JP 2003428487
(71) Applicant: KANSAI PAINT CO., LTD., Amagasaki-shi, Hyogo-ken 661-8555 (JP)
(72) Inventor: NAKAMURA, Akio, c/o KANSAI PAINT CO., LTD., Hiratsuka-shi, Kanagawa 2548562 (JP); MATSUBARA, Ikko, c/o KANSAI PAINT CO., LTD., Hiratsuka-shi, Kanagawa 2548562 (JP)
(74) Representative: Jones, Helen M.M.
(86) International application number: PCT/JP2004/018025
(87) International publication number: WO 2005/064313

(57) **Abstract**

An apparatus for measuring the optical characteristics of a colored liquid comprising a transparent plate (5) arranged horizontally, a sampling means (7) capable of collecting the colored liquid and dropping a collected colored liquid onto the transparent plate (5), and a measuring means (10) positioned beneath the transparent plate (5) for measuring the optical characteristics of the dropped colored liquid. This apparatus enables easy and accurate measurement of the optical characteristics of a colored liquid.

## Description

### TECHNICAL FIELD

The present invention relates to a method and apparatus for measuring the optical characteristics of a paint, ink, or like colored liquid.

### BACKGROUND ART

In the production of colored liquids such as paints or inks, as well as in the color matching thereof and like operations, it is extremely important that the optical characteristics of such colored liquids be accurately measured. According to one known method for such color measurement, the colored liquid is first applied or printed and then dried to thereby form a coating film, and the obtained coating film is compared with a reference color card. Such a method is commonly employed for adjusting the color to that of a standard, such as color matching in repairing cars. However, this method requires a number of steps in order to obtain a dry film, and accordingly is time-consuming. Against this backdrop, patent document 1 suggests a method wherein a liquid film of a colored liquid is formed on the surface of a substrate under a controlled condition using a doctor blade, bar coater or the like, and, without drying, color matching is performed while the subject film is still in a liquid state using a non-contact spectrophotometer.

This method is based on a certain correlation existing between the color of a liquid film and that of its dried state. It is possible by this method, within a short time, to perform color matching over and over to adjust the liquid film color to one that corresponds to the desired color, without actually drying it. However, because a non-contact spectrophotometer is employed in this method for measuring the optical characteristics of a liquid film, there is a problem in that the measurement results may vary greatly.

To obtain high measurement accuracy, a method for measuring the color of a colored liquid using a contact spectrophotometer equipped with an integrating square and the like has been suggested. For example, patent documents 2 and 3 suggest a method for measuring the color of a colored liquid filled in a measurement cell using a contact spectrophotometer.

However, the color measurement method of patent document 2 is problematic in that the measurement cell is prone to soiling because the colored liquid is circulated during the measurement causing a large amount of colored liquid to come into contact with the inner wall of the measurement cell. Further, because the measurement cell is difficult to clean, the measurement accuracy often becomes degraded.

The measurement method of patent document 3 corrects the measurement results so as to avoid the degradation of measurement accuracy by the soiling of the measurement cell, but consequently it is problematic in that a complicated operation is required.
Patent document 1: JP 1988-104900 A
Patent document 2: JP 2001-50891 A
Patent document 3: JP 2003-156394 A

### DISCLOSURE OF THE INVENTION

### PROBLEMS TO BE SOLVED BY INVENTION

An object of the present invention is to provide a method and an apparatus for measuring the optical characteristics of a colored liquid which enable easy and accurate measurement of the optical characteristics of the colored liquid.

### MEANS FOR SOLVING THE PROBLEMS

Such an object of the invention can be achieved by a method for measuring the optical characteristics of a colored liquid, the method comprising a dropping step of dropping a colored liquid onto transparent plate that is arranged horizontally, and a measuring step of measuring the optical characteristics of the dropped colored liquid from beneath the transparent plate.

In such a method for measuring the optical characteristics of a colored liquid, the measuring step is preferably started when a predetermined time has passed after the start of the dropping step.

The measuring step is preferably performed using a spectrophotometer equipped with an integrating sphere, an illumination light, and a receptor.

The object of the present invention can also be achieved by an apparatus for measuring the optical characteristics of a colored liquid, which comprises a transparent plate arranged horizontally; a sampling means capable of collecting the colored liquid and dropping the collected colored liquid onto the transparent plate; and a measuring means positioned beneath the transparent plate for measuring the optical characteristics of the dropped colored liquid.

Such an apparatus for measuring optical characteristics preferably further comprises a transporting means for transporting the sampling means between an area above the transparent plate and a container that contains the colored liquid; a driving means for driving the sampling means so as to collect and drop the colored liquid; and a controlling means for controlling the performance of the transporting means and the driving means.

The controlling means preferably makes the measuring means start measuring when a predetermined time has passed after dropping of the colored liquid is started due to the driving of the driving means.

The sampling means may be in the form of a pipette or a syringe. When the colored liquid has a low viscosity, a frame-like member may be arranged on the transparent plate to prevent the liquid from flowing off.

The measuring means preferably comprises a spectrophotometer provided with an integrating sphere, an illumination light, and a receptor.

### BRIEF DESCRIPTION OF THE DRAWINGS

Fig. 1 shows a schematic diagram of an apparatus for measuring the optical characteristics of a colored liquid according to one embodiment of the present invention.
Fig. 2 shows a schematic diagram of an apparatus for measuring the optical characteristics of a colored liquid according to another embodiment of the present invention.
Fig. 3 shows a schematic diagram of an apparatus for measuring the optical characteristics of a colored liquid according to yet another embodiment of the present invention.
Fig. 4 shows the results of measurements performed using the apparatus shown in Fig. 3 for measuring the optical characteristics of a colored liquid.
Fig. 5 shows the results of further measurements performed using the apparatus shown in Fig. 3 for measuring the optical characteristics of a colored liquid.

### DESCRIPTION OF REFERENCE NUMERALS

1. Integrating sphere
2. Receptor
3. Reflector
4. Aperture
5. Transparent plate
6. Colored liquid
7. Sampling member
8. Flow prevention member
10. Spectrophotometer
11. Multi-axis robot
12. Controlling device
13. Holding unit
15. Container

### BEST MODE FOR CARRYING OUT THE INVENTION

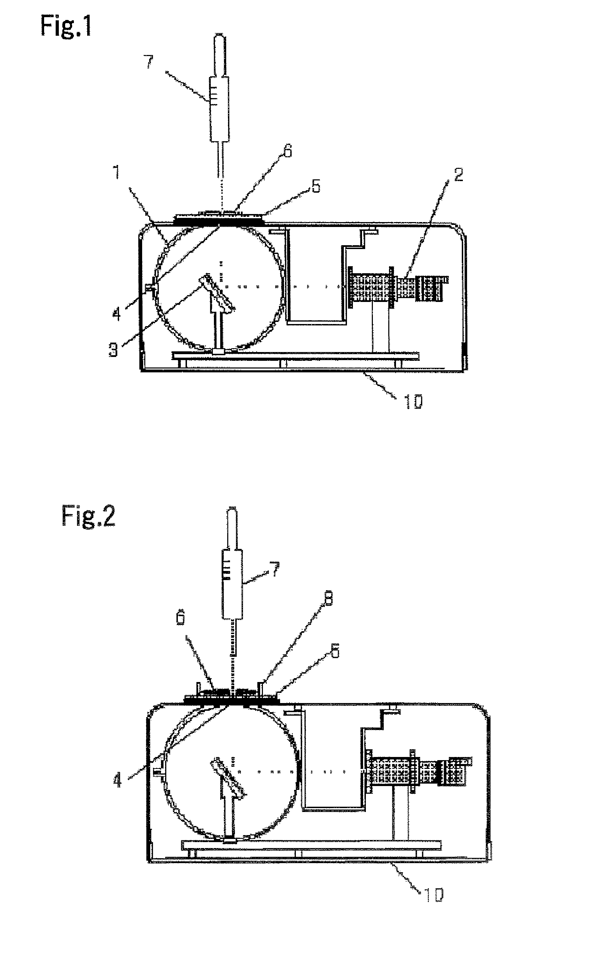

Embodiments of the present invention are explained hereafter with reference to the attached drawings. Fig. 1 is a schematic diagram of an apparatus for measuring the optical characteristics of a colored liquid according to one embodiment of the present invention.

As shown in Fig. 1, this apparatus for measuring the optical characteristics of a colored liquid comprises a spectrophotometer 10, a transparent plate 5 that is horizontally arranged above the spectrophotometer 10, and a sampling member 7 for dropping a colored liquid 6 (the measurement object) from above the transparent plate 5.

The spectrophotometer 10 is equipped with an integrating sphere 1, and a receptor 2 for detecting light emitted from the integrating sphere 1. The top face of the spectrophotometer 10 is flat and smooth, and the transparent plate 5 is mounted thereon.

At the top of the integrating sphere 1 is an aperture 4 that communicates with the outside of the spectrophotometer 10. A illumination light (not shown) such as a pulsed xenon lamp is disposed at the side of the integrating sphere 1. Light emitted from the illumination light is reflected, via multiple diffuse reflections within the integrating sphere 1 and through the aperture 4, by the colored liquid 6 that has been dropped onto a transparent plate 5. The reflected light further reflects off of a reflector 3 and is detected by the receptor 2. The integrating sphere 1 is a d/8 optical system conforming to JIS Z 8722, ISO 7724/1, and DIN 5033 teil 7. In such an integrating sphere 1, among the rays of light reflected by the colored liquid 6, only those that form an angle of 8° with the axis vertical to the surface of the transparent plate 5 are incident on the receptor 2. Although the size of the aperture 4 is not particularly limited, in terms of maintaining the desired measurement accuracy, it is preferable that its diameter be about 4 to about 30 mm, and more preferably about 8 to about 12 mm.

The transparent plate 5 may be made from quartz glass, borosilicate glass or the like, and, for ease of cleaning, is configured as a flat plate. The thickness of the transparent plate 5 is preferably 0.5 to 3 mm, and more preferably 0.8 to 2 mm, because when the thickness is too great, light attenuation increases and measurement accuracy thereby decreases, while too small a thickness causes problems with strength.

Usable as colored liquid 6 are ink products, paint products, semi-products thereof, materials for color matching, etc. Specific examples include various basic color paints for color matching, pigment pastes, varnishes, solvents, and mixtures thereof.

The sampling member 7 is made of flexible resin and has a dropper-like (pipette-like) configuration. The sampling member 7 dispenses a collected colored liquid 6 when its sidewalls are pressed, and applies suction to collect colored liquid 6 when the pressure on its sidewalls is released. The configuration of the sampling member 7 is not limited as long as it is capable of collecting and dispensing colored liquid 6. It may be, for example, in the form of a syringe that collects and dispenses a colored liquid by the sliding movement of a plunger.

Using an apparatus for measuring optical characteristics thus constructed, measurement can be carried out such that the sampling member 7 collects the colored liquid 6 contained in a container (not shown) and drops a predetermined amount thereof from above the transparent plate 5, and the spectrophotometer 10 measures the optical characteristics of the dropped colored liquid 6. More specifically, light emitted from a illumination light (not shown) into the integrating sphere 1 is reflected, via multiple diffuse reflections therein, by the colored liquid 6 through the aperture 4 and the transparent plate 5, and thereby reenters the integrating sphere 1. The reflected light further reflects off of the reflector 3 and is detected by the receptor 2. After the measurement, the transparent plate 5 may be replaced with a new one so as to drop a further colored liquid 6 thereonto and perform another measurement. The spectrophotometer 10 is not limited to an integrating sphere type but may have any known configuration. The transparent plate 5 after use is preferably washed and reused. The sampling member 7 may be disposable.

The apparatus for measuring the optical characteristics of this embodiment measures the optical characteristics of a colored liquid 6 dropped onto a transparent plate 5, thereby minimizing the soiling of the transparent plate 5 by the colored liquid 6. Further, because the transparent plate 5 is a flat plate, the surface of the transparent plate 5, on which the colored liquid 6 adheres, can be easily washed. Thus, compared with conventional techniques wherein the liquid to be measured is circulated, the present invention has a simplified structure that enables enhanced measurement accuracy. Optical characteristic measurement is preferably performed several times for the same colored liquid 6 in order to thereby further improve the measurement accuracy.

The optical characteristics of the colored liquid 6 dropped onto the transparent plate 5 may undergo change over time, such as when the pigments in the colored liquid are adsorbed by the transparent plate thereby causing color changes. Therefore, it is preferable that when measuring samples of the same colored liquid 6, the interval between the start of liquid dropping and the start of measurement by the spectrophotometer 10 be constant. The interval between the start of colored liquid 6 dropping and the start of optical characteristic measurement is preferably set to 10 seconds or less, and more preferably from 2 to 5 seconds. Such a time is preferably determined by considering the time that the dropped colored liquid 6 takes to spread over the transparent plate 5 and eventually cover the aperture 4, and depends on the kinds of pigments and dyes in the colored liquid 6, or on the viscosity of the colored liquid 6. To set the time within the above desirable range, the viscosity of colored liquid 6 is, for example, preferably adjusted to about 0.1 to about 5 Pa·s (60 rpm as measured with a B-type rotational viscosimeter at 20°C).

By controlling the timing of the measurement start, the optical characteristics of the colored liquid can be measured in an almost constant state, thereby improving the reproducibility of the measurement values. In order to achieve high reproducibility, it is preferable to control the temperature of the colored liquid 6 so that the temperature of the colored liquid 6 dropped onto the transparent plate 5 is substantially constant. The temperature of the colored liquid 6 is usually 10 to 30°C, and preferably 15 to 25°C.

When the colored liquid 6 to be dropped has a low viscosity, a frame-like flow prevention member 8 may be disposed on the transparent plate 5 as shown in Fig. 2, with the colored liquid 6 to be dropped onto the region surrounded by such a flow prevention member 8. In Fig. 2, constituent members that are the same as those in Fig. 1 are indicated by the same reference numerals.

Usable as such a flow prevention member 8 are, for example, those made of solvent-resistant synthetic resins such as PTFE (polytetrafluoroethylene), and those made of metals such as SUS304 (austenitic stainless steel). As with the transparent plate 5, the flow prevention member 8 is preferably washed for reuse after changing the liquid.

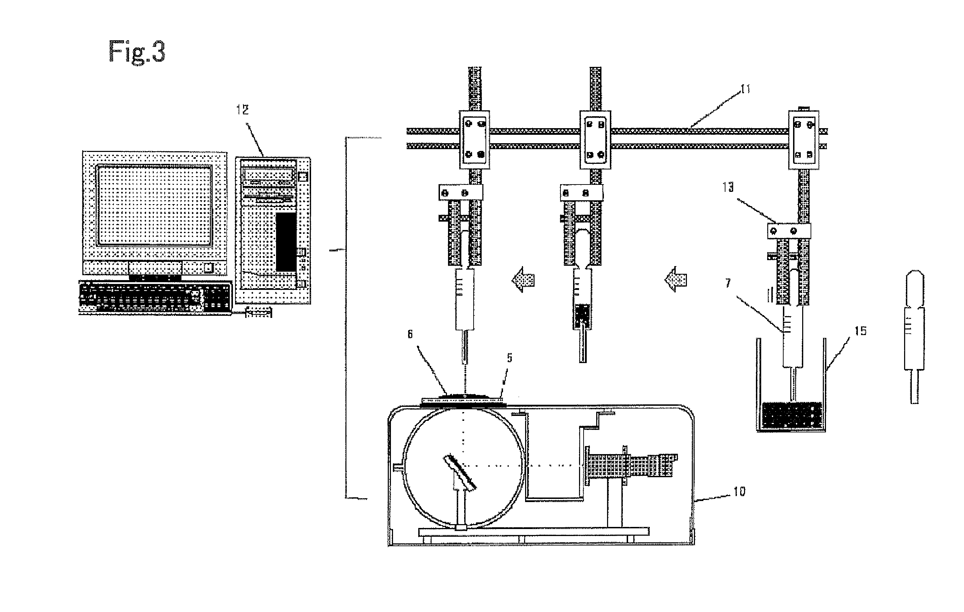

In the above embodiments, the collection and dropping of the colored liquid 6 by the sampling member 7 may be performed manually. When the optical characteristic measurement apparatus has a configuration as illustrated in Fig. 3, automatic operation is possible for collecting and dropping the colored liquid, and also for measuring its optical characteristics.

The apparatus for measuring the optical characteristics shown in Fig. 3 is equipped with a multi-axis robot 11 comprising a holding unit 13 for gripping the upper sidewall of the sampling member 7, whereby the sampling member 7 can be transported to a desired position. In Fig. 2, constituent members that are the same as those in Fig. 1 are indicated by the same reference numerals.

The holding unit 13 is constructed so that the force for gripping the sampling member 7 is adjustable. The a holding unit 13 functions as a driving means for driving the sampling member 7 to collect and drop the colored liquid. Specifically, by increasing the force for gripping the sampling member 7, the sides of the sampling member 7 are pressed and the colored liquid 6 contained therein is thereby dispensed, while by decreasing the gripping force, the pressure on the sides of the sampling member 7 is released and the colored liquid 6 is thereby collected by suction. When the sampling member 7 has a syringe-like structure, the holding unit 13 may comprise a driving member for axially moving a plunger, with the sampling member 7 being driven by such a driving member.

The multi-axis robot 11 of this embodiment is a transportation robot XY that biaxially (i.e., vertically and horizontally) moves the sampling member 7. This robot is capable of transporting the sampling member 7 between an area above a transparent plate 5 and a container 15 that contains the colored liquid 6. Not only XY robots but also arm-type robots may be used as such a multi-axis robot 11, as long as it is a material-handling robot having a holding function.

The gripping force of the holding unit 31, the transportation function that the multi-axis robot 11 performs, and the measurement function that the spectrophotometer 10 conducts may be controlled by a controlling device 12.

In an optical characteristic measurement apparatus thus constructed, the multi-axis robot 11 transports the sampling member 7 squeezed by the holding unit 13 to a container 15, and, with the end of the sampling member 7 being immersed in the colored liquid 6 contained therein, the pressure applied by the holding unit 13 is released, whereby the sampling means 7 collects the colored liquid 6. Next, the multi-axis robot 11 moves the sampling member 7 to an area above the transparent plate 5 in the direction indicated by the arrows in Fig. 3, and then the holding unit 13 squeezes the sampling member 7 to thereby drop the colored liquid onto the transparent plate 5. These operations are performed under the control of a controlling device 12.

The controlling device 12 makes the spectrophotometer 10 start the measurement when a predetermined time has passed after the start of dropping due to the squeezing of the holding unit 13. Such a predetermined time can be set according to the above-described method. A measurer may suitably set the time and record it in a memory of the controlling device 12 prior to measurement. An apparatus for measuring the optical characteristics of such an embodiment can automatically control the interval between the start of dropping and the start of measurement, and accordingly, a highly reproducible measurement is achievable even more easily.

When several kinds of colored liquid 6 are successively measured using the apparatus of Fig. 3 for measuring optical characteristics, a plurality of sampling members 7 may be prestored in a stocker (not shown). When a sampling member 7 has finished dropping the colored liquid 6 and is moved back to the original storing position, the holding unit 13 may pick up a new sampling member 7 and take it from the stocker, so as to measure the optical characteristics of a different kind of colored liquid 6 following the steps described above.

Using the apparatus shown in Fig. 3 for measuring optical characteristics, variation of the color differences ΔE depending on the time from the start of dropping to the start of measurement (elapsed time) was observed with respect to each of the three kinds of paint described below.
Red Paint (RT): An alkyd resin-based baking paint containing perylene-based pigment (red) and titanium white (titanium oxide)
Yellow Paint (YT): An alkyd resin-based baking paint containing monoazo-based pigment (yellow) and titanium white (titanium oxide)
Blue Paint (BT): An alkyd resin-based baking paint containing copper phthalocyanine-based pigment (blue) and titanium white (titanium oxide)

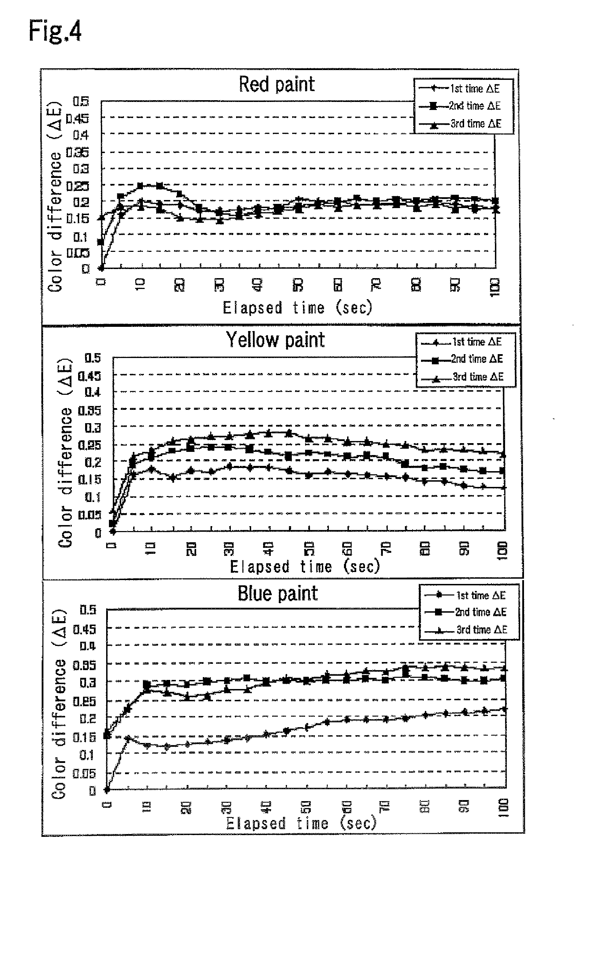

The temperature of each paint was adjusted to 20°C (with viscosity being about 0.8 Pa·s), and a controlling device 12 controlled the timing of the measurements to be every 5 seconds from the start of dropping for 100 seconds. Measurement was performed three times for each of the paints. The first measurement value at 0 seconds was defined as a reference value, and color differences ΔE were obtained for each paint. Each color difference ΔE was calculated based on the difference between the reference value and the measurement value at each timed measurement. The obtained results are shown in Fig. 4.

As shown in Fig. 4, variation of the color differences ΔE was especially large for 10 seconds after the start of measurement. It can accordingly be understood that when the interval between the start of paint dropping and the start of optical characteristic measurement is set within this time range, it is difficult to maintain measurement accuracy unless such an interval is constant for every measurement.

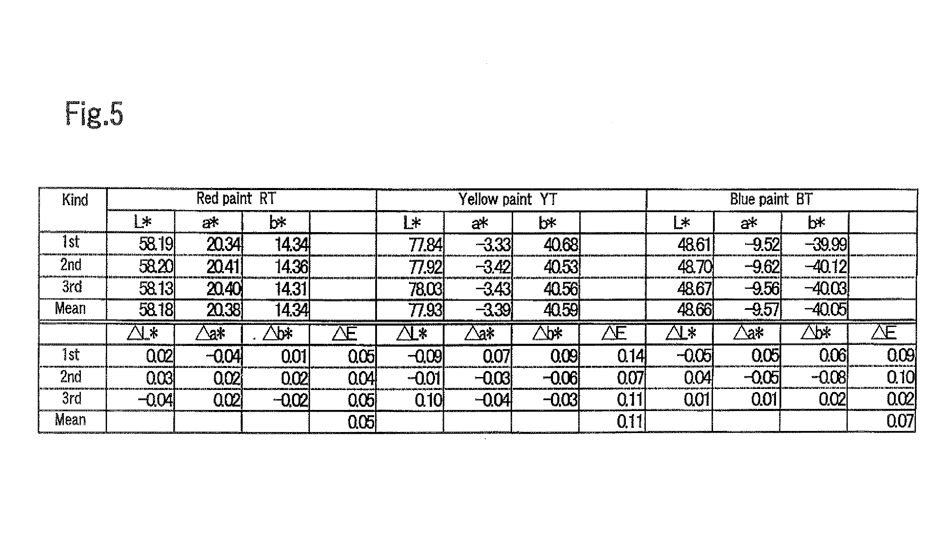

Further, with respect to each of the paints, measurement at 3 seconds after the start of dropping was carried out three times, and the mean of the three measurement values was calculated. Color differences ΔE were obtained for each paint based on the differences between the obtained mean measurement values and values of the three measurements. The results are shown in Fig. 5. As is clear from the results, the maximum color difference ΔE was only 0.14 (with a maximum average value of 0.11), indicating that highly accurate measurement was achieved for all of the paints.

### INDUSTRIAL APPLICABILITY

The present invention provides a method and apparatus for measuring the optical characteristics of a colored liquid, thus enabling easy and accurate measurement of the optical characteristics of a colored liquid. The invention is suitable for use in, for example, computerized color matching.

## Claims

1. A method for measuring the optical characteristics of a colored liquid comprising:
a dropping step of dropping a colored liquid onto a transparent plate arranged horizontally, and
a measuring step of measuring the optical characteristics of the dropped colored liquid from beneath the transparent plate.

2. A method for measuring the optical characteristics of a colored liquid according to Claim 1, wherein the measuring step comprises starting measurement when a predetermined time has passed after the start of dropping in the dropping step.

3. Method for measuring the optical characteristics of a colored liquid according to Claim 1, wherein the measuring step is performed using a spectrophotometer equipped with an integrating sphere, an illumination light, and a receptor.

4. An apparatus for measuring the optical characteristics of a colored liquid, comprising:
a transparent plate arranged horizontally,
a sampling means capable of collecting a colored liquid and dropping the collected colored liquid onto the transparent plate, and
a measuring means for measuring the optical characteristics of the dropped colored liquid, the measuring means being positioned beneath the transparent plate.

5. An apparatus for measuring the optical characteristics of a colored liquid according to Claim 4, further comprising:
a transporting means for transporting the sampling means between an area above the transparent plate and a container containing the colored liquid,
a driving means for driving the sampling means to collect and drop the colored liquid, and
a controlling means for controlling the operation of the transporting means and the driving means.

6. An apparatus for measuring the optical characteristics of a colored liquid according to Claim 5, wherein the controlling means makes the measuring means start measurement when a predetermined time has passed after dropping of the colored liquid is started due to the driving of the driving means.

7. An apparatus for measuring the optical characteristics of a colored liquid according to Claim 5, wherein the sampling means is in the form of a pipette or a syringe.

8. An apparatus for measuring the optical characteristics of a colored liquid according to Claim 4, further comprising a frame-like flow prevention member, the flow prevention member being positioned on the surface of the transparent plate.

9. An apparatus for measuring the optical characteristics of a colored liquid according to Claim 4, wherein the measuring means further comprises a spectrophotometer equipped with an integrating sphere, an illumination light, and a receptor.
